# EUROPÄISCHE PATENTANMELDUNG

(11) **EP 1 123 849 A2**
(43) Veröffentlichungstag der Anmeldung: **16.08.2001**
(21) Anmeldenummer: 01102672.1
(22) Anmeldetag: 07.02.2001
(51) Int. Cl.: B60T 13/57

(54) **Bremskraftübersetzungsvorrichtung insbesondere für Kraftfahrzeuge**

(30) Priorität: 11.02.2000 DE 10006011
(71) Anmelder: Continental Teves AG & Co. oHG, 60488 Frankfurt (DE)
(72) Erfinder: Schonlau, Jürgen, 65396 Walluf (DE); Wagner, Wilfried, 35625 Hüttenberg (DE); Graichen, Kai-Michel, 63225 Langen (DE)
(74) Vertreter: Portwich, Peter

(57) **Zusammenfassung**

Die Erfindung betrifft eine Bremskraftübersetzungsvorrichtung, insbesondere für Kraftfahrzeuge mit einem betätigbaren Eingangsglied 2, einem Ausgangsglied 3 zur Beaufschlagung insbesondere eines Hauptbremszylinders mit einer Verstärkungskraft und mit einem in einem Steuergehäuse 5 angeordneten Steuerventil 4 zur Regelung der Verstärkungskraft, wobei im Bereich eines Reaktionsglieds 24 ein axial bewegbares Druckstück 30 vorgesehen ist, welches sich an dem Eingangsglied 2 oder dem Steuergehäuse 5 abstützt und dadurch eine Änderung des Kraftübersetzungsverhältnis ermöglicht, und mit einem in das Steuergehäuse 5 integrierten napfförmigen Aufnahmekörper 10 für das Reaktionsglied 24. Der Kern der Erfindung liegt darin begründet, daß eine Anlagefläche 11 für das Reaktionsglied 24 im Bereich des Eingangsglieds 2 mit wenigstens einer stufenförmigen Ausnehmung 17 versehen ist, in die ein Teil des Reaktionsglieds 24 nur bei erhöhten Reaktionskräften drängbar ist, und daß sich dadurch eine dem Eingangsglied 2 mitgeteilte Bremsreaktionskraft reduziert, oder eine einem Ausgangsglied 3 mitgeteilte Bremskraft erhöht.

Im Ergebnis erhält der Fahrzeugführer durch diese Maßnahmen eine erhöhte Servounterstützung, wenn höhere Verzögerungswerte nachgefragt werden, und zwar unabhängig von einer parallel dazu abrufbaren BA-Funktion (Brake-Assist-Funktion).

## Beschreibung

Die Erfindung betrifft eine Bremskraftübersetzungsvorrichtung, insbesondere für Kraftfahrzeuge mit einem betätigbaren Eingangsglied, einem Ausgangsglied zur Beaufschlagung insbesondere eines Hauptbremszylinders mit einer Verstärkungskraft und mit einem in einem Steuergehäuse angeordneten Steuerventil zur Regelung der Verstärkungskraft, wobei im Bereich eines Reaktionsglieds ein axial bewegbares Druckstück vorgesehen ist, welches sich an dem Eingangsglied oder dem Steuergehäuse abstützt und dadurch eine Änderung des Kraftübersetzungsverhältnis ermöglicht und mit einem in das Steuergehäuse integrierten napfförmigen Aufnahmekörper für das Reaktionsglied.

Ein derartiger Bremskraftverstärker mit einer Kupplungsvorrichtung ist beispielsweise aus der WO 9926826 bekannt und erlaubt einen sprunghaften Anstieg der Verstärkungskraft verbunden mit einem unendlichen Übersetzungsverhältnis, wenn ein Fahrzeugführer mittels ruckartiger Bremsbetätigung eine bestimmte Relativverschiebung zwischen Verstärkerbauteilen herbeiführt (sogenannter BA-mode, BA steht für **B**rake **A**ssist). Mit anderen Worten besitzt der Bremskraftverstärker eine grundsätzliche bekannte Verstärkerkennlinie (non-BA-mode), mit einem bestimmten Übersetzungsverhältnis, und ferner eine Panikbremsfunktion mit unendlichem Übersetzungsverhältnis, welche infolge ruckartiger Bremsbetätigung abrufbar ist (BA-mode).

Es besteht das Bedürfnis, den Bremsbetätigungskomfort des Kraftverstärkers weiter zu verbessern. Ein wesentliches Ziel der Bemühungen ist, in einem Bereich geringer Verzögerung eine verbesserte Dosierbarkeit zu erreichen, und in einem Bereich erhöhter Verzögerungen eine verstärkte Fahrerunterstützung bereitzustellen, wenn die Panikbremsfunktion wegen einer noch nicht erreichten Schaltschwelle, das heißt einer zu geringen Relativverschiebung, noch nicht eingreift. Die Maßnahmen sollen weiterhin eine reibungslose Panikbremsfunktion erlauben und kostengünstig sein, damit sie ohne Hinderungsgründe in den Großserienbau einfließen können.

Eine Möglichkeit zur Kennlinienbeeinflußung ist beispielsweise aus der EP 705 190 B1 bekannt. Ein Ventilkolben der Vorrichtung steht in Wirkverbindung mit einem federnd vorgespannten Druckstück, welches zusammen mit dem Ventilkolben axial in Richtung eines Reaktionsglied bewegbar ist. Sobald eine bestimmte vorgegebene Eingangskraft vorliegt, welche die Vorspannkraft der auf das Druckstück wirkenden Feder überwindet, schlägt das Druckstück an dem Steuergehäuse an und überträgt einen Kraftanteil auf das Reaktionsglied, so daß es zu einer Veränderung des wirksamen Flächenverhältnis und mit dieser Maßnahme zu einer Änderung der Verstärkerkennlinie kommt. Schließlich ist das Druckstück formschlüssig mit dem Steuergehäuse gekoppelt. Dies bedeutet, daß der Fahrer in dem Betriebsbereich oberhalb der vorgegebenen Eingangskraft für eine Steigerung der Bremskraft weniger Fußkraft aufwenden muß, als dies in dem Betriebsbereich unterhalb der vorgegebenen Eingangskraft notwendig ist. Die Änderung der Kennlinie ist also abhängig von der herrschenden Eingangskraft (Fußkraft).

Diese bekannte Bremskraftübersetzungsvorrichtung bietet dem Fahrzeugführer ein unkomfortables Funktionsverhalten. Dies liegt darin begründet, daß für eine Notbremsung immer eine bestimmte Fußkraft überschritten werden muß, damit die Bremskraftübersetzungsvorrichtung ein erhöhtes Verstärkungsverhältnis zur Verfügung stellt. Es kann somit wertvolle Zeit verstreichen, bis die vorbestimmte Eingangskraft aufgebaut ist. Bei einer Notbremsung ist es jedoch wichtig, die Bremskraft schnell und ohne unnötigen Zeitverlust bereitzustellen, denn jede Verzögerung ist mit einer Verlängerung des Bremsweges verbunden. Andererseits wird die erhöhte Verstärkungskraft bei der bekannten Bremskraftübersetzungsvorrichtung auch zur Verfügung gestellt, wenn die Eingangskraft nur geringfügig oberhalb des vorgegebenen Kraft-Schwellwertes ist und die erhöhte Verstärkungskraft grundsätzlich nicht notwendig wäre.

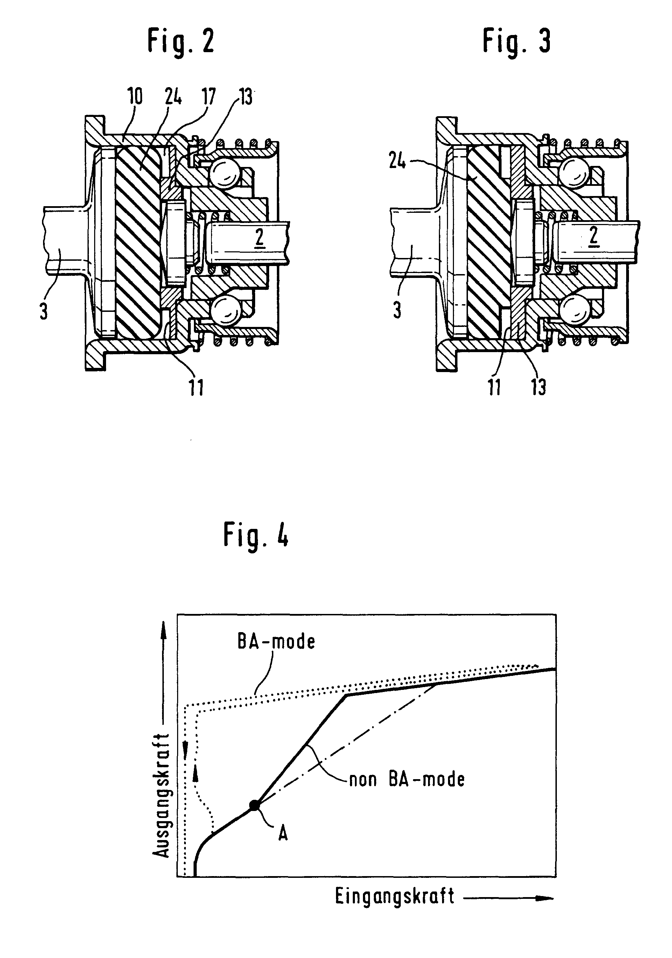

Die vorstehend beschriebene Aufgabe wird erfindungsgemäß dadurch gelöst, daß eine eingangsgliedseitige Anlagefläche für das Reaktionsglied mit wenigstens einer stufenförmigen Ausnehmung versehen ist, in die ein Teil des Reaktionsglieds bei erhöhten Reaktionskräften drängbar ist, so daß sich eine dem Eingangsglied mitgeteilte Bremsreaktionskraft reduziert, oder eine einem Ausgangsglied mitgeteilte Bremskraft erhöht. Die Erfindung erlaubt eine feine Bremsdosierung im Bereich geringer Verzögerungen, bietet dem Fahrzeugführer darüber hinaus eine erhöhte Servounterstützung im Bereich erhöhter Verzögerungen und erlaubt schließlich eine BA-Funktion mit unendlichem Übersetzungsverhältnis (Panikbremsfunktion) für den Notbremsfall. Die Erfindung ermöglicht es auch, in den BA-mode zu gelangen, selbst wenn sich das Gerät in einem Betriebszustand der non-BA-mode-Kennlinie oberhalb des Punkt A in Fig. 4 befindet.
Gemäß einer anderen erfindungsgemäßen Lösung weist das Reaktionsglied im Bereich wenigstens einer Anlagefläche stufenform auf, so daß bei geringen Bremsreaktionskräften ein geringerer Flächenteil zur Anlage an einer eingangsgliedseitigen Anlagefläche kommt, als bei hohen Bremsreaktionskräften, unter denen sich das Reaktionsglied stärker verformt, wodurch folglich größere Flächenteile tragen. In Hinblick auf die bereits genannte EP 705 190 Bl ist die Erfindung insbesondere mit dem Vorteil verbunden, daß ein gesondertes elastisches Mittel nicht benötigt wird. Ferner läßt sich eine Änderung der Form des Reaktionsglieds noch kostengünstiger umsetzen, als ein verändertes Austauschstück.

Weitere Einzelheiten der Erfindung gehen aus Unteransprüchen im Zusammenhang mit der Beschreibung und der Zeichnung hervor. Die Erfindung wird nachstehend anhand von zwei grundsätzlich unterschiedlichen Lösungen, die in der Zeichnung dargestellt sind, näher erläutert. In der Zeichnung zeigt:
- Fig. 1: eine Steuergruppe einer Bremskraftübersetzungsvorrichtung gemäß einer ersten Lösung im vergrößerten Längsschnitt, teilweise weggebrochen und in einer Bereitschaftsstellung;
- Fig. 2: eine Einzelheit einer abgewandelten Ausführungsform im Schnitt;
- Fig. 3: eine im Vergleich zu den Fig. 1 und 2 andere Lösung, und
- Fig. 4: ein Diagramm zur schematischen Verdeutlichung von Verstärkerkennlinien.

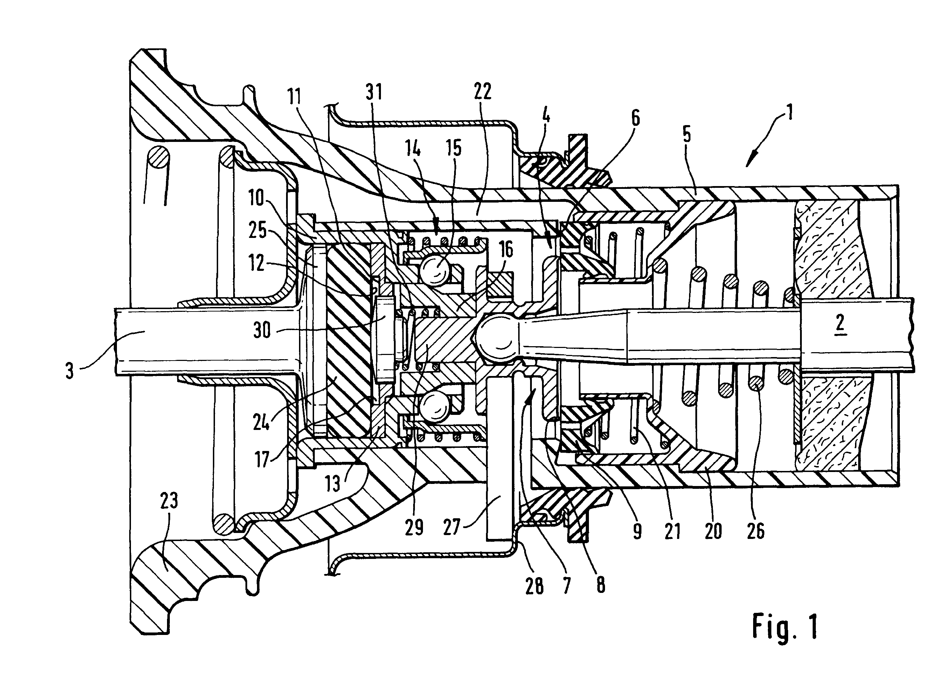

Die in der Figur 1 gezeichnete Steuereinheit 1 einer Bremskraftübersetzungsvorrichtung dient zur Steuerung und Regelung der Kraftverstärkung in einer Kraftfahrzeug-Bremsanlage. Die Bremskraftübersetzungsvorrichtung 1 umfaßt ein nicht gezeichnetes Verstärkergehäuse, welches durch eine nicht gezeigte axial bewegliche Wand in eine Unterdruckkammer und in eine Arbeitskammer unterteilt ist. Die bewegliche Wand besteht aus einem Membranteller und einer daran anliegenden flexiblen Membran, die an einem äußeren Umfang des Membrantellers und dem Verstärkergehäuse eine Rollmembran als Abdichtung bildet. Weiterhin umfaßt die Bremskraftübersetzungsvorrichtung als Eingangsglied 2 eine Betätigungsstange und als Ausgangsglied 3 eine Druckstange, welche beispielsweise auf einen nicht gezeichneten hydraulischen Hauptbremszylinder wirkt. Ein durch das Eingangsglied 2 betätigbares Steuerventil 4 ist in einem, in dem Verstärkergehäuse abgedichtet geführten und die bewegliche Wand tragenden Steuergehäuse 5 untergebracht und besteht aus einem am Steuergehäuse 5 ausgebildeten ersten Dichtsitz 6, einem an einem mit dem Eingangsglied 2 verbundenen Ventilkolben 7 ausgebildeten zweiten Dichtsitz 8 sowie einem mit beiden Dichtsitzen 6,8 zusammenwirkenden, in dem Steuergehäuse 5 abgedichtet angeordneten, in einem Führungsteil 20 geführten Ventilkörper 9, der mittels einer sich am Führungsteil 20 abstützenden Ventilfeder 21 gegen die Ventilsitze 6,8 gedrückt wird. Die Arbeitskammer ist mit der Unterdruckkammer über einen seitlich im Steuergehäuse 5 verlaufenden Kanal 22 verbindbar.

Die Bremskraft wird über ein stirnseitig an einem Vorderteil 23 des Steuergehäuse 5 anliegendes gummielastisches Reaktionsglied 24 übertragen. Der Kraftfluß erfolgt weiterhin über die als Ausgangsglied 3 wirkende Druckstange mit dem Kopfflansch 25 auf einen Betätigungskolben eines nicht gezeichneten Hauptbremszylinders der Kraftfahrzeugbremsanlage, welcher vorzugsweise an der unterdruckseitigen Verstärkergehäusehälfte angebracht ist.

Eine in der Zeichnung nicht dargestellte Rückstellfeder, die sich an der unterdruckseitigen Stirnwand des Verstärkergehäuse abstützt, hält die bewegliche Wand in der Ausgangsstellung. Außerdem ist eine zweite Druckfeder bzw. Betätigungsstangenrückstellfeder 26 vorgesehen, die einerseits indirekt an der Betätigungsstange und andererseits am Führungsteil 20 abgestützt ist und deren Kraft für eine Vorspannung des Ventilkolbens 7 bzw. seines Dichtsitzes 8 gegenüber dem Ventilkörper 9 sorgt.

Um die Arbeitskammer bei der Betätigung des Steuerventils 4 mit der Atmosphäre verbinden zu können, ist schließlich im Steuergehäuse 5 ein nicht gezeigter annähernd radial verlaufender Kanal ausgebildet. Die Rückkehrbewegung des Ventilkolbens 7 am Ende eines Bremsvorganges wird durch ein Querglied 27 begrenzt, das sich, wie in der Figur dargestellt, im Abstand zu einem an dem Verstärkergehäuse ausgebildeten Anschlag 28 befindet.

Wie Fig. 1 weiter eindeutig erkennen läßt, ist der Ventilkolben 7 an seinem reaktionsgliedseitigen Ende 29 zweiteilig ausgebildet und verfügt über ein axial relativ zu dem Ventilkolben 7 bewegbares Druckstück 30, welches zusammen mit dem Ventilkolben 7 in Richtung Reaktionsglied 24 bewegbar ist. Schließlich ist zwischen Druckstück 30 und Ventikolbenende 29 eine Feder 31 angeordnet, so daß das Druckstück 30 mit einer vorzugsweise kegelförmigen Spitze zumindest federn an dem Reaktionsglied 24 anliegt, oder durch unmittelbare Abstützung an dem Ende 29 in Anlage gedrängt wird.

In das Steuergehäuse 5 ist schließlich ein zumindest teilweise napfförmiger Aufnahmekörper 10 für das Reaktionsglied 24 vorgesehen. Je nach Ausführungsform ist es denkbar eine Anlagefläche 11 für die eingangsgliedseitige Stirnfläche 12 des Reaktionsglieds 24 entweder unmittelbar an dem Aufnahmekörper 10 selbst oder aber an einem separaten Austauschstück 13 anzuordnen. Letzteres eröffnet dabei insbesondere die Möglichkeit einen Austauschbau zur einfachen und kostengünstigen Anpassung an unterschiedliche Betätigungscharakteristiken bei unterschiedlichen Fahrzeugtypen vorzunehmen, weil hierfür keinerlei einschneidende Änderungen des Betätigungsmechanismus vorgenommen werden müssen.

Schließlich ist eine Kupplungsvorrichtung 14 mit in den Aufnahmekörper 10 integrierten Kugeln 15 und einer Steuerbuchse 16 vorgesehen, so daß das Druckstück 30 in Abhängigkeit von einer Relativverschiebung zwischen Steuergehäuse 5 und Ventilkolben 7 an dem Steuergehäuse 5 festlegbar ist.

Weitere Einzelheiten der Erfindung in Hinblick auf Betätigung und Funktion der Vorrichtung und insbesondere der Kupplungsvorrichtung 14 sind der WO 9926826 zu entnehmen, deren diesbezüglicher Offenbarungsgehalt in vollem Umfang in die vorliegende Beschreibung einbezogen wird.

Um einen verbesserten Bremsbetätigungskomfort bereitzustellen, ist eine eingangsgliedseitige Anlagefläche 11 für das Reaktionsglied 24 mit wenigstens einer stufenförmigen Ausnehmung 17 versehen, in die ein Teil des Reaktionsglieds 24 bei erhöhten Reaktionskräften drängbar ist, so daß sich eine dem Eingangsglied 2 mitgeteilte Bremsreaktionskraft reduziert, oder eine einem Ausgangsglied 3 mitgeteilte Bremskraft erhöht. Im Ergebnis erhält der Fahrzeugführer dadurch eine verstärkte Servowirkung, wenn höhere Verzögerungswerte nachgefragt werden. Die genannte Anlagefläche 11 mit der Ausnehmung 17 kann sich entweder unmittelbar einstückig an dem Aufnahmekörper 10 befinden. Beispielsweise wäre es denkbar, die Ausnehmung 17 im Rahmen von umformtechnischen Tiefziehoperationen einfach in den Aufnahmekörper 10 einzuformen. Gemäß einer anderen Lösung, welche auch mit den gezeigten Ausführungsbeispielen übereinstimmt, nimmt der Aufnahmekörper 10 ferner ein Austauschstück 13 auf, welches mit der gewünschten Ausnehmung 17 versehen ist. Dies ermöglicht eine besonders einfache Abwandlung oder Anpassung der Betätigungscharakteristik an unterschiedliche Kundenwünsche und Fahrzeuge, indem lediglich das Austauschstück 13 angepaßt und gewechselt wird. Es versteht sich in diesem Zusammenhang, daß mit der Form der Ausnehmung 17 der Verlauf eines Kennlinienknick wie er beispielsweise der Fig. 4 entnehmbar ist, nicht unerheblich beeinflußt werden kann. In diesem Zusammenhang sind für die Ausnehmung 17 oder eine Stufe unterschiedlichste Formen und Profilierungen (Würfelsegment, Pyramiden-(stumpf-), Kugelsegment, Kegel-(stumpf-)) denkbar.

Im übrigen ist in Figur 4 eine Verstärkerkennlinie im non-BA-mode unter Anwendung der Erfindung mit durchgezogener Linienart gekennzeichnet, wobei sich bei dem Punkt A ein Knick, eine Abrundung oder ähnliches ergibt, was von der entsprechend vorgesehenen Profilierung der Ausnehmung oder der Stufe abhängig ist. Ohne Anwendung der Erfindung ergibt sich im non-BA-mode ab Punkt A der strichpunktierte Kennlinienverlauf, wohingegen der BA-mode mit einer aus aneinandergereihten Punkten bestehenden Linie gekennzeichnet ist und hierbei wegen Hystereseeinfluß zwischen einer Hin- und Rückbewegung unterschieden werden muß. Es versteht sich, daß mit der Erfindung auch in den BA-mode mit unendlichem Übersetzungsverhältnis gewechselt werden kann, selbst wenn sich das Bremsgerät bereit in einem Kennlinienpunkt des non-BA-mode mit einer erhöhten Servounterstützung oberhalb des Knick A befindet. Um dies zu erreichen, muß lediglich der Schaltpunkt überwunden, das heißt durch schnelle Bremsbetätigung eine entsprechende Relativverschiebung hervorgerufen werden. Von einer Verdeutlichung solcher Betätigungsfälle wurde in der Figur jedoch Abstand genommen, um die Übersichtlichkeit nicht zu beeinträchtigen. Im übrigen sind in der Praxis nahezu unendlich viele Kennlinienkonstellationen möglich, deren Verdeutlichung den vorliegenden Rahmen sprengen würde.

Wie Figur 1 zeigt, ist die Ausnehmung 17 in dem Austauschstück 13 unmittelbar radial neben einer Durchgangsbohrung für das Druckstück 30 vorgesehen, so daß sich dadurch die beschriebenen Wirkungen ergeben.

Um die Beanspruchung des Reaktionsglieds 24 zu reduzieren, ist es in Anlehnung an Figur 2 vorteilhaft, die Ausnehmung 17 in radialem Abstand zu der Durchgangsbohrung für das Druckstück 30 vorzusehen. Dadurch werden überhöhte Reibung und auch zu Rissen führende Verformungen vermieden. Unabhängig von diesen Ausführungsformen ist es gemäß einer anderen Abwandlung der Erfindung denkbar, die Ausnehmung 17 bezüglich des Reaktionsglieds 24 radial außen und zwar ringförmig umlaufend beispielsweise in einer Innenwandung des Aufnahmekörpers 10 vorzusehen, was die axiale Baulänge reduziert und auch die Beanspruchung senkt.

In Abkehr von den vorstehend beschriebenen Ausführungsformen ist es zur Lösung des Problems schließlich denkbar, das Reaktionsglied 24 wie in Fig. 3 im Bereich wenigstens einer Anlagefläche 11 mit einer Stufenform zu versehen, so daß bei geringen Bremsreaktionskräften ein geringerer Flächenanteil des Reaktionsglieds 24 zur Anlage an der eingangsgliedseitigen Anlagefläche 11 kommt, als bei hohen Bremsreaktionskräften, unter denen sich das Reaktionsglied 24 stark verformt.

## Patentansprüche

1. Bremskraftübersetzungsvorrichtung, insbesondere für Kraftfahrzeuge mit einem betätigbaren Eingangsglied (2), einem Ausgangsglied (3) zur Beaufschlagung insbesondere eines Hauptbremszylinders mit einer Verstärkungskraft und mit einem in einem Steuergehäuse (5) angeordneten Steuerventil (4) zur Regelung der Verstärkungskraft, wobei im Bereich eines Reaktionsglieds (24) ein axial bewegbares Druckstück (30) vorgesehen ist, welches sich an dem Eingangsglied (2) oder dem Steuergehäuse (5) abstützt und dadurch eine Änderung des Kraftübersetzungsverhältnis ermöglicht,und mit einem in das Steuergehäuse (5) integrierten napfförmigen Aufnahmekörper (10) für das Reaktionsglied (24), dadurch **gekennzeichnet,** daß eine Anlagefläche (11) für das Reaktionsglied (24) im Bereich des Eingangsglieds (2) mit wenigstens einer Ausnehmung (17) versehen ist, in die ein Teil des Reaktionsglieds (24) nur bei erhöhten Reaktionskräften drängbar ist, und daß sich dadurch eine dem Eingangsglied (2) mitgeteilte Bremsreaktionskraft reduziert, oder eine einem Ausgangsglied (3) mitgeteilte Bremskraft erhöht.

2. Bremskraftübersetzungsvorrichtung nach Anspruch 1, dadurch **gekennzeichnet,** daß die Ausnehmung (17) in einem Austauschstück (13) und in radialer Richtung unmittelbar neben einer Durchgangsbohrung für das Druckstück (30) vorgesehen ist.

3. Bremskraftübersetzungsvorrichtung nach Anspruch 1, dadurch **gekennzeichnet,** daß die Ausnehmung (17) in radialem Abstand zu einer Durchgangsbohrung für das Druckstück (30) vorgesehen ist.

4. Bremskraftübersetzungsvorrichtung nach Anspruch 1, dadurch **gekennzeichnet,** daß die Ausnehmung (17) bezüglich des Reaktionsglieds (24) radial außen im Bereich dessen Umfangs vorgesehen ist.

5. Bremskraftübersetzungsvorrichtung mit den Merkmalen des Oberbegriff von Patentanspruch 1, dadurch **gekennzeichnet,** daß das Reaktionsglied (24) im Bereich wenigstens einer vorzugsweise glatten Anlagefläche (11) Stufenform aufweist, so daß bei geringen Bremsreaktionskräften ein geringerer Flächenteil zur Anlage an einer eingangsgliedseitigen Anlagefläche (11) kommt, als bei hohen Bremsreaktionskräften, unter denen sich das Reaktionsglied (24) stärker verformt.

6. Bremskraftübersetzungsvorrichtung nach einem der vorhergehenden Ansprüche 1-5, dadurch **gekennzeichnet,** daß die Ausnehmung (17) oder die Stufenform des Reaktionsglieds (24) für die Beeinflussung der Übersetzungskennlinie eine Profilierung (Würfelsegment-, Pyramiden(stumpf-), Kugelsegment-Form) aufweist.
